# EUROPEAN PATENT APPLICATION

(11) **EP 2 518 947 A1**
(43) Date of publication of application: **31.10.2012**
(21) Application number: 09852450.7
(22) Date of filing: 24.12.2009
(51) Int. Cl.: H04L 12/28

(54) **METHOD, DEVICE AND SYSTEM FOR DELIVERING ADVERTISEMENT**

(71) Applicant: Huawei Device Co., Ltd., Longgang District Shenzhen Guangdong 518129 (CN)
(72) Inventor: ZHANG, Ke, Guangdong 518129 (CN)
(74) Representative: Pfenning, Meinig & Partner GbR
(86) International application number: PCT/CN2009/075979
(87) International publication number: WO 2011/075900

(57) **Abstract**

Embodiments of the present invention disclose a method, an apparatus, and a system advertisement delivery. The method includes: receiving a user request for visiting a local WEB page of a home gateway, where the user request is sent by a user terminal; and obtaining an address of advertisement data corresponding to a stored advertisement parameter, assembling the address of the advertisement data into data on the local WEB page of the home gateway according to the advertisement parameter, and sending the data into which the address of the advertisement data is assembled on the local WEB page of the home gateway. According to the method and apparatus provided in the embodiments of the present invention, through a home gateway, advertisements may be delivered to different users in a user-oriented manner, which overcomes a defect that by using an advertisement delivery method in the prior art, different advertisements cannot be delivered to different users in the user-oriented manner.

## Description

### FIELD OF THE INVENTION

The present invention relates to network technologies, and more particularly to a method, an apparatus, and a system for advertisement delivery.

### BACKGROUND OF THE INVENTION

With the development of technologies, a broadband terminal, as a final node of a broadband network, has been popularized. Among access technologies, a digital subscriber line (Digital Subscriber Line, referred to as xDSL) access technology has been a mainstream for broadband access of homes and small enterprises, and a passive optical network (Passive Optical Network, referred to as xPON) has also been developed greatly in recent years. The broadband network has been an important way for the public to obtain information.

Currently, a network advertisement is mainly delivered through a website. This kind of advertisement delivery method has the following problems: When a user accesses the Internet, the user needs to visit a specific website to obtain a specific advertisement. For example, if an operator selects to release an advertisement on www.sohu.com (www.sohu.com), a user can see the advertisement only by visiting www.sohu.com, while a user visiting www.sina.com (www.sina.com) cannot see the advertisement. Furthermore, if an advertisement is delivered by using this method, all users see the same advertisement, which is not user-oriented.

### SUMMARY OF THE INVENTION

Directed to the problem in the prior art, embodiments of the present invention provide a method, an apparatus and a system for advertisement delivery, which can send advertisements to different users in a user-oriented manner through a home gateway.

An embodiment of the present invention provides an advertisement delivery method, which includes:
receiving a user request for visiting a local WEB page of a home gateway, where the user request is sent by a user terminal; and
obtaining an address of advertisement data corresponding to a stored advertisement parameter, assembling the address of the advertisement data into data on the local WEB page of the home gateway according to the advertisement parameter, and
sending the data into which the address of the advertisement data is assembled on the local WEB page of the home gateway.

An embodiment of the present invention further provides a home gateway, which includes:
a first receiving module, configured to receive an advertisement parameter sent by a remote network management server;
a storage module, connected to the first receiving module, and configured to store the advertisement parameter received by the first receiving module;
a second receiving module, configured to receive a user request for visiting a local WEB page of a home gateway , where the user request is sent by a user terminal;
an address obtaining module, connected to the storage module, and configured to obtain an address of advertisement data corresponding to the advertisement parameter that is stored by the storage module;
an assembling module, respectively connected to the second receiving module and the address obtaining module, and configured to, after the second receiving module receives the user request for visiting the local WEB page of the home gateway, assemble the address of the advertisement data into data on the local WEB page of the home gateway, where the address of the advertisement data is obtained by the address obtaining module; and
a first sending module, connected to the assembling module, and configured to send the data into which the address of the advertisement data is assembled on the local WEB page of the home gateway, where the data is processed by the assembling module.

An embodiment of the present invention further provides a user terminal, which includes:
a second sending module, configured to send a user request for visiting a local WEB page of a home gateway;
a third receiving module, configured to receive data into which an address of advertisement data is assembled on the local WEB page of the home gateway, where the data is sent by a home gateway;
a parsing module, connected to the third receiving module, and configured to parse the address of the advertisement data, where the address of the advertisement data is received by the third receiving module;
a data obtaining module, connected to the parsing module, and configured to obtain the advertisement data according to the address of the advertisement data, where the address of the advertisement data is parsed by the parsing module; and
a displaying module, configured to display the data on the local WEB page of the home gateway, where the data is received by the third receiving module, and the advertisement data obtained by the data obtaining module.

An embodiment of the present invention further provides an advertisement delivery system, which includes a remote network management server configured to send an advertisement parameter, the home gateway as described in the preceding, and the user terminal as described in the preceding, where the home gateway is respectively connected to the remote network management server and the user terminal.

With the method, apparatus and system for advertisement delivery provided in the embodiments of the present invention, when a user request for visiting a local WEB page of a home gateway is received, where the user request is sent by a user terminal, an address of advertisement data corresponding to an advertisement parameter is obtained, the address of the advertisement data is assembled into data on the local WEB page of the home gateway according to a stored advertisement parameter, and the data into which the address of the advertisement data is assembled on the local WEB page of the home gateway is sent to the user terminal. In this way, the user terminal may display an advertisement on the local WEB page of the home gateway. Through a home gateway, advertisements may be delivered to different users in a user-oriented manner, which overcomes a defect that by using an advertisement delivery method in the prior art, different advertisements cannot be delivered to different users in the user-oriented manner.

The technical solutions in the present invention are further described in detail in the following with reference to the accompanying drawings and embodiments.

### BRIEF DESCRIPTION OF THE DRAWINGS

FIG. 1 is a schematic structural diagram of an advertisement delivery system according to an embodiment of the present invention;
FIG. 2 is a schematic structural diagram of a home gateway according to an embodiment of the present invention;
FIG. 3 is a schematic structural diagram of a user terminal according to an embodiment of the present invention; and
FIG. 4 is a flow chart of an advertisement delivery method according to an embodiment of the present invention.

### DETAILED DESCRIPTION OF THE EMBODIMENTS

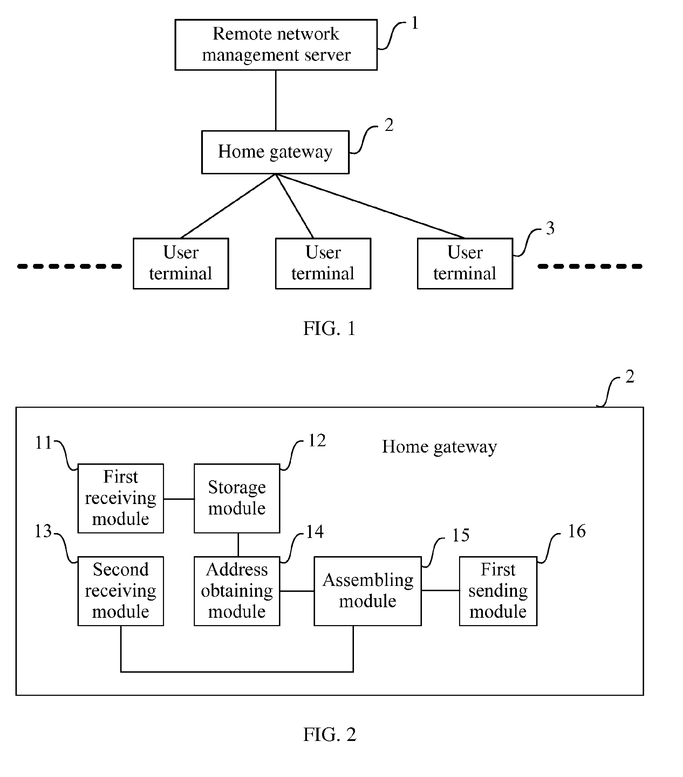

FIG. 1 is a schematic structural diagram of an advertisement delivery system according to an embodiment of the present invention. The system includes a remote network management server 1, a home gateway 2, and a user terminal 3 which are connected to each other, where the remote network management server 1 sends an advertisement parameter, the home gateway 2 receives the advertisement parameter sent by the remote network management server 1, and one home gateway 2 may be connected to one or more user terminals 3. Advertisement parameters are a series of configuration parameters used for delivering an advertisement, where the configuration parameters are issued by the remote network management server to the home gateway, and the advertisement parameter may include an advertisement data download parameter, an advertisement data hyperlink parameter, and the like. The advertisement data download parameter refers to a uniform resource locator (Uniform Resources Locator, referred to as URL) of the advertisement data, and the advertisement data hyperlink parameter is a URL that is attached to the advertisement data. Each advertisement parameter of the same type may be organized under the same advertisement node in a form of a tree. The advertisement data may be a picture, video, audio, or text, where the picture, video, audio, or text is to be released.

FIG. 2 is a schematic structural diagram of a home gateway according to an embodiment of the present invention. The home gateway 2 includes a first receiving module 11, a storage module 12, a second receiving module 13, an address obtaining module 14, an assembling module 15, and a first sending module 16. The first receiving module 11 is configured to receive an advertisement parameter sent by a remote network management server 1. The storage module 12 is connected to the first receiving module 11, and is configured to store the advertisement parameter received by the first receiving module 11. The second receiving module 13 is configured to receive a user request for visiting a local WEB page of a home gateway, where the user request is sent by a user terminal. The address obtaining module 14 is connected to the storage module 12, and is configured to obtain an address of advertisement data corresponding to the advertisement parameter that is stored by the storage module 12. The assembling module 15 is connected to the second receiving module 13 and the address obtaining module 14, and is configured to, after the second receiving module 13 receives the user request for visiting the local WEB page of the home gateway, assemble the address of the advertisement data into data on the local WEB page of the home gateway, where the address of the advertisement data is obtained by the address obtaining module 14. The first sending module 16 is connected to the assembling module 15, and is configured to send the data into which the address of the advertisement data is assembled on the local WEB page of the home gateway, where the data is processed by the assembling module 15.

The address obtaining module 14 may be specifically configured to obtain an address of the advertisement data corresponding to the advertisement parameter in a wide area network, or is configured to obtain a storage address of the advertisement data corresponding to the advertisement parameter in the home gateway. The home gateway may further include a data storage module, configured to store the advertisement data corresponding to the advertisement parameter that is received by the first receiving module 11. Specifically, according to the advertisement parameter received by the first receiving module 11, advertisement data may be downloaded from a network address that is corresponding to the advertisement data, and the advertisement data is stored.

The home gateway as shown in FIG. 2 may further include a redirecting module, configured to redirect a received user request for visiting various types of WEB pages as a user request for visiting a local WEB page of a home gateway, and send the user request for visiting the local WEB page of the home gateway to the second receiving module 13.

The assembling module may be specifically configured to, after the second receiving module 13 receives the user request for visiting the local WEB page of the home gateway, assemble the address of the advertisement data and a hyperlink that is linked to an advertisement website that is corresponding to the advertisement data and specified by the advertisement parameter into the data on the local WEB page of the home gateway. In this way, after receiving the data into which the hyperlink and the address of the advertisement data are assembled on the local WEB page of the home gateway, the user terminal obtains the advertisement data from the address of the advertisement data, that is, obtains a picture according to an address of the picture, and displays the picture on the local WEB page of the home gateway.

With the home gateway provided in this embodiment of the present invention, when the second receiving module receives the user request for visiting the local WEB page of the home gateway, where the user request is sent by the user terminal, the address obtaining module obtains the address of the advertisement data corresponding to the advertisement parameter, and the assembling module assembles the address of the advertisement data into the data on the local WEB page of the home gateway according to the stored advertisement parameter, and sends the data into which the address of the advertisement data is assembled on the local WEB page of the home gateway to the user terminal. In this way, the user terminal may display an advertisement on the local WEB page of the home gateway. Through the home gateway, advertisements may be delivered to different users in a user-oriented manner, which overcomes a defect that by using an advertisement delivery method in the prior art, different advertisements cannot be delivered to different users in the user-oriented manner.

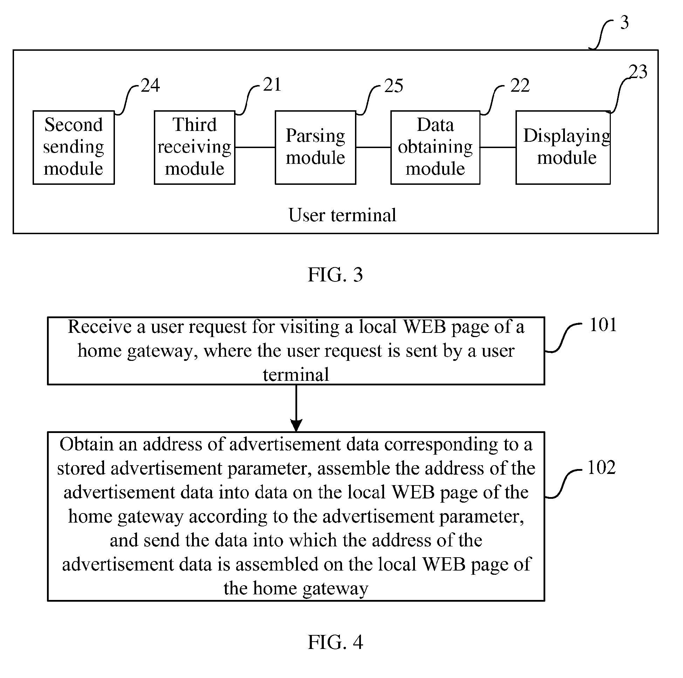

FIG. 3 is a schematic structural diagram of a user terminal according to an embodiment of the present invention. A user terminal 3 includes a second sending module 24, a third receiving module 21, a parsing module 25, a data obtaining module 22, and a displaying module 23. The second sending module 24 is configured to send a user request for visiting a local WEB page of a home gateway. The third receiving module 21 is configured to receive data into which an address of advertisement data is assembled on the local WEB page of the home gateway, where the data is sent by a home gateway. The parsing module 25 is connected to the third receiving module 21, and is configured to parse the address of the advertisement data, where the address of the advertisement data is received by the third receiving module 21. The data obtaining module 22 is connected to the parsing module 25, and is configured to obtain the advertisement data according to the address of the advertisement data, where the address of the advertisement data is parsed by the parsing module 25. The displaying module 23 is configured to display the data on the local WEB page of the home gateway, where the data is received by the third receiving module 21, and the advertisement data is obtained by the data obtaining module 22.

Specifically, the data obtaining module 22 may respectively obtain, according to each address of the advertisement data, the advertisement data corresponding to each address, where each address of the advertisement data is parsed by the parsing module 25. For example, addresses of the advertisement data sent by the home gateway include three addresses, and the three addresses are respectively address A, address B, and address C. Data stored at address A is data a, data stored at address B is data b, and data stored at address C is data c. The data obtaining module 22 may obtain the data a from the address A, obtain the data b from the address B, and obtain the data c from the address C.

For a working principle of the home gateway, the user terminal and the advertisement delivery system according to each embodiment in the preceding, reference is made to the following description of an advertisement delivery method embodiment.

FIG. 4 is a flow chart of an advertisement delivery method according to an embodiment of the present invention, which includes:
Step 101: Receive a user request for visiting a local WEB page of a home gateway, where the user request is sent by a user terminal; and
Step 102: Obtain an address of advertisement data corresponding to a stored advertisement parameter, assemble the address of the advertisement data into data on the local WEB page of the home gateway according to the advertisement parameter, and send the data into which the address of the advertisement data is assembled on the local WEB page of the home gateway.

The preceding steps 101 and 102 may be performed by a home gateway, where the local WEB page of the home gateway refers to a WEB page that is provided by a WEB server built in the home gateway.

Before step 101, receiving and storing the advertisement parameter sent by a remote network management server may be included.

Step 101 may specifically include receiving a user request for visiting various types of WEB pages, where the user request is sent by the user terminal, and redirecting the user request for visiting various types of WEB pages as a user request for visiting a local WEB page of a home gateway. The user may visit the local WEB page of the home gateway initiatively, that is to say, the advertisement data can be displayed to the user, if needed, only when the user request for visiting the local WEB page of the home gateway is received. In order to initiatively display the advertisement data to a user, a received user request for visiting various types of WEB pages may be redirected as a user request for visiting a local WEB page of a home gateway, so that even if the user accesses a network to visit another WEB page, the advertisement data may also be displayed to the user.

In step 102, the obtaining the address of the advertisement data corresponding to the stored advertisement parameter may include: obtaining an address of the advertisement data corresponding to the advertisement parameter in a wide area network, or obtaining a storage address of the advertisement data corresponding to the advertisement parameter in the home gateway. After receiving the advertisement parameter, the home gateway may obtain the address of the advertisement data in the wide area network according to the advertisement parameter, and the home gateway itself does not store the advertisement data. The home gateway may also obtain the address of the advertisement data from the advertisement parameter, downloads and stores the advertisement data. In step 102, the obtained address of the advertisement data is the storage address of the advertisement data in the home gateway.

For the user terminal, after receiving the data into which the address of the advertisement data are assembled on the local WEB page of the home gateway, where the data is sent by the home gateway, the advertisement data may be obtained according to the address of the advertisement data, and the advertisement data and the data on the local WEB page of the home gateway are displayed. If the address of the advertisement data is the address in the wide area network, the user terminal obtains the advertisement data from the network, and if the address of the advertisement data is the storage address of the advertisement data in the home gateway, the user terminal obtains the advertisement data from the home gateway.

In step 102, the assembling the address of the advertisement data into the data on the local WEB page of the home gateway may specifically include: assembling a hyperlink that is linked to an advertisement website that is corresponding to the advertisement data and specified by the advertisement parameter, and the address of the advertisement data into the data on the local WEB page of the home gateway. In this way, after the data into which the hyperlink and the address of the advertisement data are assembled on the local WEB page of the home gateway is sent to the user terminal, the user terminal may display the advertisement data and the data on the local WEB page of the home gateway, and once the user clicks the advertisement data, the user terminal may display a page to which a hyperlink points to the user.

To facilitate the description, FIG. 1 only illustrates one remote network management server and one home gateway. A remote network management server may be connected to a plurality of home gateways, and each home gateway may be connected to at least one user terminal such as a computer and a personal digital assistant (Personal Digital Assistant, referred to as PDA). In a TR069 protocol, the remote network management server is an auto configuration server (Auto Config Server, referred to as ACS). The remote network management server may also be a server supporting remote network management in other network management protocols such as a simple network management protocol (Simple Network Management Protocol, referred to as SNMP).

A working principle of the first embodiment of the present invention is described in the following by taking that the advertisement data is a picture as an example.

The home gateway may predefine a WEB page structure and set one or more regions in a common WEB page to display the advertisement data. The home gateway may assemble the address of the advertisement data and the WEB page according to the predefined WEB page structure in combination with the advertisement parameter.

The remote network management server issues the advertisement parameter to the home gateway. The parameters may include: a picture download parameter InternetGatewayDevice.Advertising.{i}.PictureDownloadURL and a hyperlink parameter InternetGatewayDevice.Advertising.{i}.TargetWebURL. The advertisement parameter may be organized in a form of a tree, the advertisement parameter with the same type is set under the same advertisement node, and each advertisement parameter may be regarded as a branch of the advertisement node. The picture download parameter is a URL of a picture, and the hyperlink parameter is a URL that is attached to the picture. The advertisement parameter issued by the remote network management server to the home gateway may be in the following forms:
InternetGatewayDevice.Advertising. {1} .PictureDownloadURL = "http://www.abcdefg.com/abcdefg_log.jpg"
InternetGatewayDevice.Advertising.{1}.TargetWebURL = "http://www.abcdefg.com",
where InternetGatewayDevice.Advertising.{i}. is an advertisement node.

The picture download parameter may further include optional parameters such as a picture size parameter and a picture display position parameter. In this embodiment of the present invention, it is assumed that a picture size and a display position are fixed, that is, the picture size and the display position are fixed when the picture is displayed on the local WEB page of the home gateway.

The home gateway receives and stores the advertisement parameter issued by the remote network management server. When receiving the user request for visiting the local WEB page of the home gateway, the home gateway obtains the address of the advertisement data corresponding to the advertisement parameter. The address of the advertisement data may be an address of the advertisement data in a network, and may also the storage address of the advertisement data in the home gateway. The home gateway assembles the address of the advertisement data into the data on the local WEB page of the home gateway according to the stored advertisement parameter. Because the advertisement parameter includes various types of configuration parameters, the home gateway assembles the address of the advertisement data according to the configuration parameters, which may ensure that display of the advertisement data on the local WEB page of the home gateway is corresponding to the configuration parameters. The home gateway may further attach a hyperlink to the advertisement data. Specifically, the home gateway may attach a hyperlink specified by the http://www.abcdefg.com parameter to a picture. The hyperlink is linked to an advertisement website that is corresponding to the picture. The hyperlink and an address of the picture are assembled into the data on the local WEB page of the home gateway, and the data into which the hyperlink and the address of the picture are assembled on the local WEB page of the home gateway is sent. After receiving the data into which the hyperlink and the address of the picture are assembled on the local WEB page of the home gateway, the user terminal obtains the picture according to the address of the picture, and displays the picture on the local WEB page of the home gateway. When the user clicks the picture, a browser window may be popped up to display the advertisement website that is corresponding to the picture. For example, the advertisement picture may be a logo (logo) of a certain company, and a hyperlink that is attached to the picture is linked to a homepage of the company.

When a user request for visiting various types of WEB pages is received, including requests for visiting a local WEB page of a home gateway and a non-home gateway local WEB page, the user request may be redirected as a user request for visiting the local WEB page of the home gateway. Specifically, when the home gateway receives the user request for visiting various types of WEB pages, the request may be a hypertext transfer protocol (HyperText Transfer Protocol, referred to as HTTP) request, and the HTTP request may be redirected to the local WEB page of the home gateway according to some policies. For example, the policy may be that, when a user HTTP request is received, if the home gateway is not connected to the network, the home gateway provides a dial-up page to redirect the user HTTP request to the dial-up page.

After the home gateway receives the advertisement parameter issued by the remote network management server, if the PictureDownloadURL conforms to the HTTP, the home gateway may download a picture at a PictureDownloadURL position and store the picture. When receiving the user request for visiting the local WEB page of the home gateway, the home gateway assembles a storage address of the picture in the home gateway into the data on the local WEB page of the home gateway.

Alternatively, after the home gateway receives the advertisement parameter issued by the remote network management server, if the PictureDownloadURL conforms to the HTTP, the home gateway may not download the picture. When receiving the user request for visiting the local WEB page of the home gateway, the home gateway assembles the address of the picture in the network into the data on the local WEB page of the home gateway.

According to the advertisement delivery method and system, the home gateway and the user terminal provided in the embodiments of the present invention, when the user request for visiting the local WEB page of the home gateway is received, where the user request is sent by the user terminal, the address of the advertisement data corresponding to the advertisement parameter is obtained, the address of the advertisement data is assembled into the data on the local WEB page of the home gateway according to the stored advertisement parameter, and the data into which the address of the advertisement data are assembled on the local WEB page of the home gateway is sent to the user terminal. In this way, the user terminal may display an advertisement on the local WEB page of the home gateway. Through the home gateway, advertisements may be delivered to different users in a user-oriented manner, which overcomes a defect that by using an advertisement delivery method in the prior art, different advertisements cannot be delivered to different users in the user-oriented manner.

Furthermore, by redirecting the user request for visiting various types of WEB pages as the user request for visiting the local WEB page of the home gateway, no matter whether the user visits the local WEB page of the home gateway or not, the local WEB page of the home gateway with an advertisement may be displayed to the user, so that the advertisements are delivered to different users in the user-oriented manner.

Finally, it should be noted that the preceding embodiments are merely used for describing the technical solutions in the present invention, but are not intended to limit the present invention. Although the present invention has been described in detail with reference to exemplary embodiments, it should be understood by persons of ordinary skill in the art that modifications or equivalent replacements may still be made to the technical solutions in the present invention, however, these modifications or equivalent replacements cannot cause modified technical solutions to depart from the scope of the present invention.

## Claims

1. An advertisement delivery method, comprising:
receiving a user request for visiting a local WEB page of a home gateway, wherein the user request is sent by a user terminal; and
obtaining an address of advertisement data corresponding to a stored advertisement parameter, assembling the address of the advertisement data into data on the local WEB page of the home gateway according to the advertisement parameter, and sending data into which the address of the advertisement data is assembled on the local WEB page of the home gateway.

2. The method according to claim 1, wherein, before the obtaining the address of the advertisement data corresponding to the stored advertisement parameter, further comprising:
receiving and storing the advertisement parameter sent by a remote network management server.

3. The method according to claim 1, wherein the receiving the user request for visiting the local WEB page of the home gateway, wherein the user request is sent by the user terminal comprises:
receiving a user request for visiting various types of WEB pages, wherein the user request is sent by the user terminal, and redirecting the user request for visiting various types of WEB pages as the user request for visiting the local WEB page of the home gateway.

4. The method according to any one of claims 1 to 3, wherein:
the obtaining the address of the advertisement data corresponding to the stored advertisement parameter comprises obtaining an address of the advertisement data corresponding to the advertisement parameter in a wide area network; or
the obtaining the address of the advertisement data corresponding to the stored advertisement parameter comprises obtaining a storage address of the advertisement data corresponding to the advertisement parameter in a home gateway.

5. The method according to any one of claims 1 to 3, wherein the assembling the address of the advertisement data into the data on the local WEB page of the home gateway comprises:
assembling a hyperlink that is linked to an advertisement website corresponding to the advertisement data and specified by the advertisement parameter, and the address of the advertisement data into the data on the local WEB page of the home gateway.

6. A home gateway, comprising:
a first receiving module, configured to receive an advertisement parameter sent by a remote network management server;
a storage module, connected to the first receiving module, and configured to store the advertisement parameter received by the first receiving module;
a second receiving module, configured to receive a user request for visiting a local WEB page of a home gateway, wherein the user request is sent by a user terminal;
an address obtaining module, connected to the storage module, and configured to obtain an address of advertisement data corresponding to the advertisement parameter that is stored by the storage module;
an assembling module, respectively connected to the second receiving module and the address obtaining module, and configured to, after the second receiving module receives the user request for visiting the local WEB page of the home gateway, assemble the address of the advertisement data into data on the local WEB page of the home gateway, wherein
the address of the advertisement data is obtained by the address obtaining module; and
a first sending module, connected to the assembling module, and configured to send the data into which the address of the advertisement data is assembled on the local WEB page of the home gateway, wherein the data is processed by the assembling module.

7. The home gateway according to claim 6, further comprising:
a redirecting module, configured to redirect a received user request for visiting various types of WEB pages as a user request for visiting a local WEB page of a home gateway,
and send the user request for visiting the local WEB page of the home gateway to the second receiving module.

8. The home gateway according to claim 6 or 7, wherein the address obtaining module is specifically configured to obtain an address of the advertisement data corresponding to the advertisement parameter in a wide area network, or is configured to obtain a storage address of the advertisement data corresponding to the advertisement parameter in the home gateway.

9. The home gateway according to claim 8, further comprising a data storage module, configured to store the advertisement data corresponding to the advertisement parameter that is received by the first receiving module.

10. The home gateway according to claim 6 or 7, wherein the assembling module is specifically configured to, after the second receiving module receives the user request for visiting the local WEB page of the home gateway, assemble a hyperlink that is linked to an advertisement website corresponding to the advertisement data and specified by the advertisement parameter, and the address of the advertisement data into the data on the local WEB page of the home gateway.

11. A user terminal, comprising:
a second sending module, configured to send a user request for visiting a local WEB page of a home gateway;
a third receiving module, configured to receive data into which an address of advertisement data is assembled on the local WEB page of the home gateway, wherein the data is sent by a home gateway;
a parsing module, connected to the third receiving module, and configured to parse the address of the advertisement data, wherein the address of the advertisement data is received by the third receiving module;
a data obtaining module, connected to the parsing module, and configured to obtain the advertisement data according to the address of the advertisement data, wherein the address of the advertisement data is parsed by the parsing module; and
a displaying module, configured to display the data on the local WEB page of the home gateway, wherein the data is received by the third receiving module, and the advertisement data obtained by the data obtaining module.

12. An advertisement delivery system, comprising: a remote network management server configured to send an advertisement parameter, the home gateway according to any one of claims 6 to 10, and the user terminal according to claim 11, wherein the home gateway is respectively connected to the remote network management server and the user terminal.
